# NEW EUROPEAN PATENT SPECIFICATION

(11) **EP 2 063 011 B2**
(45) Date of publication and mention of the opposition decision: **04.06.2014**
(45) Mention of the grant of the patent: 12.01.2011
(21) Application number: 07121371.4
(22) Date of filing: 22.11.2007
(51) Int. Cl.: D06F 37/30

(54) **Electric household appliance**
Elektrisches Haushaltsgerät
Appareil ménager électrique

(43) Date of publication of application: 27.05.2009
(60) Divisional application: 11150164.9
(73) Proprietor: Electrolux Home Products Corporation N.V., 1130 Brussel (BE)
(72) Inventor: Maguolo, Costantino, 33077 Sacile (IT); Bottos, Roberto, 33080 Porcia (IT)
(74) Representative: Nardoni, Andrea

(56) References cited:
- EP-A- 1 548 169
- EP-A1- 1 691 470
- WO-A-2004/059829
- US-A1- 2007 063 603
- US-B1- 6 184 639
- US-B1- 6 220 894
- US-B1- 6 442 979

## Description

The present invention relates to an electric household appliance.

More specifically, the present invention relates to an electric household appliance preferably corresponding to a home drier or washing machine, to which the following description refers purely by way of example.

As is known, currently marketed washing machines comprise a casing, in which is fitted a laundry wash assembly typically comprising a wash tub, a laundry drum mounted inside the wash tub to rotate freely about a respective axis of rotation, a pulley fitted to the laundry drum drive shaft, and a drive in turn comprising an electric motor connected to the pulley by a drive belt to rotate the laundry drum about its axis of rotation.

Washing machines of the above type also comprise an electronic control module typically defined by an inverted, which varies the speed of the electric motor on the basis of a number of control signals generated by a central control unit as a function of the operating cycle set by the user.

More specifically, the electronic control module, i.e. inverter, is currently mounted inside the washing machine casing, a given distance from the electric motor, and is wired to the electric motor by electric cables in the space inside the casing.

As is known, a major goal in the washing machine industry is to devise technical solutions enabling a reduction in assembly time, and therefore manufacturing cost, of the machines.

Unfortunately, at present, the step of assembling the electric/electronic components, and in particular the drive, of washing machines of the above type is particularly time-consuming, and so fails to meet the above requirements. In fact, assembly of the above components involves a number of separate operations comprising fixing the electric motor to the bottom face of the wash tub; fixing the electronic control module to an inner lateral wall of the casing; connecting the electric motor electrically to the inverter by means of a number of cables; and, finally, arranging the electric wiring compactly inside the casing.

It is an object of the present invention to provide an electric household appliance comprising a compact, integrated drive designed to reduce the assembly time of the appliance.

According to the present invention, there is provided an electric household appliance as claimed in Claim 1 and, preferably, in any one of the following US 6,442,979 discloses a method and device for driving a clothes washing machine motor at a predetermined speed is presented. The washing machine motor, which may be an AC induction motor, is powered by a DC to AC inverter that includes a DC bus. The DC bus current is measured and the inverter output frequency is adjusted in response to the DC bus current measurement. In exemplary embodiments, measuring the DC bus current includes measuring the voltage drop across a resistor coupled to the DC bus. The frequency adjustment may be calculated by multiplying the DC bus current by a compensation factor to calculate a frequency adjustment value. Alternatively, frequency adjustment values may be stored in a look-up table, and the measured DC bus current is used to index the look-up table.

Claims depending directly or indirectly on Claim 1.

A non-limiting embodiment of the present invention will be described by way of example with reference to the accompanying drawings, in which:
Figure 1 shows a schematic view in perspective, with parts removed for clarity, of an electric household appliance in accordance with the teachings of the present invention;
Figure 2 shows a side view in perspective of a drive forming part of the Figure 1 appliance;
Figure 3 shows a view in perspective, with parts removed for clarity, of a detail of the drive of the Figure 1 appliance;
Figure 4 shows a side view in perspective of connection of an electronic control module to a housing portion of the Figure 2 drive;
Figure 5 shows a side view in perspective of the Figure 4 electronic module;
Figure 6 shows a larger-scale cross section VI-VI of the electronic circuit of the Figure 5 electronic module.

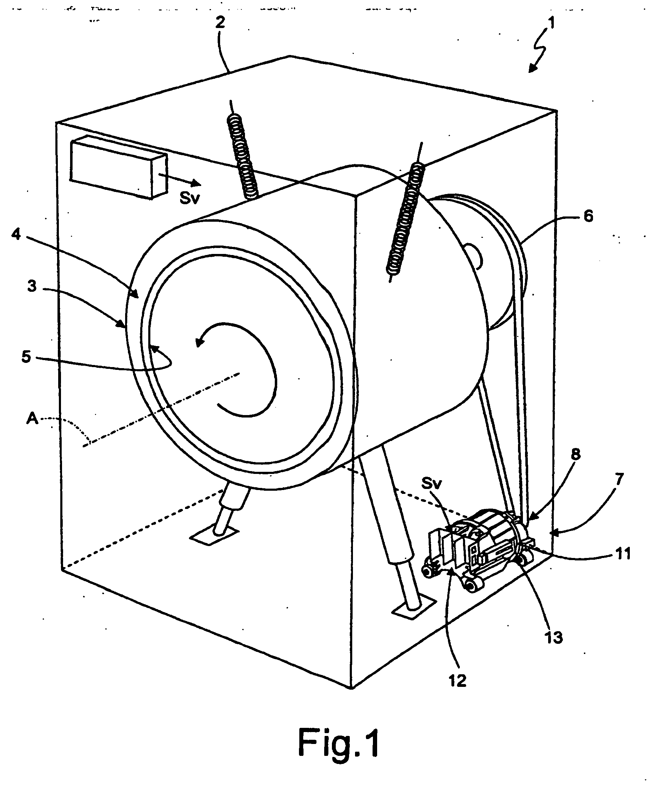

Number 1 in Figure 1 indicates as a whole an electric household appliance corresponding preferably, though not necessarily, to a washing machine. It is understood, however, that the following description also applies equally well to a home laundry drier.

Washing machine 1 comprises an outer casing 2, in which is fitted a laundry wash assembly 3, in turn comprising a wash tub 4, a laundry drum 5 housing the laundry and mounted inside wash tub 4 to rotate freely about a predetermined axis of rotation A, a pulley 6 fitted to the drive shaft of drum 5, a drive 7 having a drive shaft 8 connected to pulley 6 by a drive belt 9 to rotate drum 5 about axis of rotation A, and a main control unit 10 for generating control signals S_{V} to control the rotation speed of drum 5 as a function of a predetermined wash cycle memorized in main control unit 10 and selected by the user.

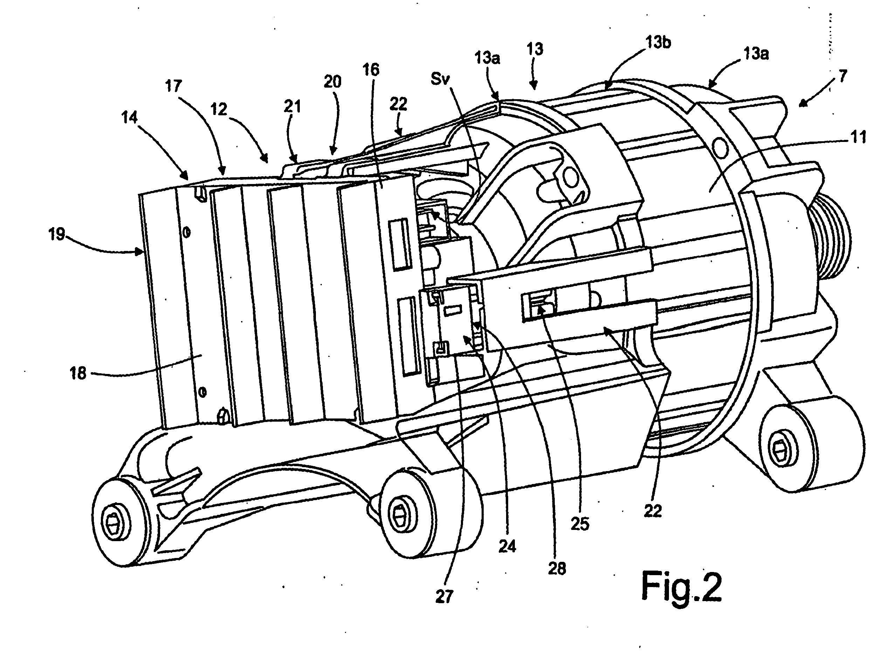

More specifically, with reference to Figures 1 and 2, drive 7 substantially comprises an electric motor 11, and an electronic control module 12, which, unlike the electronic control modules of known appliances, is integrated with the electric motor 11 to form, with it, a single, compact body integrating electric motor 11 and electronic control module 12.

More specifically, in the example shown, the electronic control module 12 is integrated with the housing 13 of electric motor 11 to form, with it, a single, compact outer casing, i.e. one body integrating electric motor 11 and electronic control module 12.

In the example shown, electronic control module 12 is fitted stably, but in easily removable manner, to housing 13 of electric motor 11, and forms a single, compact outer casing with housing 13.

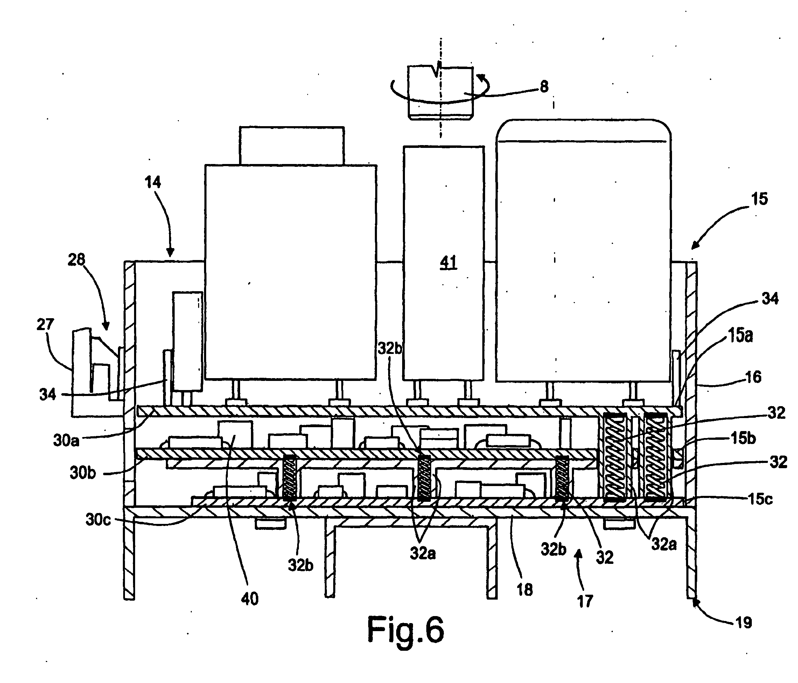

With reference to the Figure 2 example, electronic control module 12 substantially comprises a protective outer container or case 14 fixed stably, but in easily removable manner, to housing 13 to advantageously form, with housing 13, the outer casing of drive 7; and an electronic circuit 15 (Figure 6) at least partially housed inside case 14 and connected electrically to both main control unit 10, to receive speed control signals SV, and to electric motor 11 to command a variation in rotation speed by the electric motor as a function of speed control signals S_{V}.

More specifically, case 14 is fixed to housing 13, immediately adjacent to one of the two end portions 13a of housing 13 of electric motor 11. In the example shown, housing 13 of electric motor 11 comprises at least one half-shell or lateral cover 13a defining one of the end portions of housing 13, and case 14 is designed to fit stably, but in easily removable manner, to an outer wall of lateral cover 13a.

More specifically, housing 13 is substantially divided into three different portions : a central portion 13b, which is preferably, though not necessarily, externally cylindrical; and two axial end portions, each defined by an cover 13a. In the example shown, central portion 13b is preferably, though not necessarily, made of metal, and houses a stator (not shown) connected electrically to electronic circuit 15 as described below, and a rotor (not shown) mounted to rotate freely inside the stator, and the shaft of which defines drive shaft 8. More specifically, according to an embodiment the central portion 13b could be the outer metal surface of the stator of the electric motor 11.

The two covers 13a, on the other hand, are conveniently made of plastic, and are fitted stably, but in easily removable manner, to opposite ends of central portion 13b.

Case 14 is preferably, though not necessarily, made of plastic, is substantially box-shaped, and is designed to house electronic circuit 15.

More specifically, in the example shown, case 14 substantially comprises a box member 16 open at both axial ends, and which is closed at one open end by a heatsink 17. In the example shown, heatsink 17 comprises a base plate 18 of heat-conducting material, e.g. aluminium, closing the open end of the box member 16; and a number of dispersion plates 19 projecting from the outer face of base plate 18.

The opposite side to dispersion plates 19, base plate 18 has a smooth surface for preferably, though not necessarily, supporting electronic circuit 15.

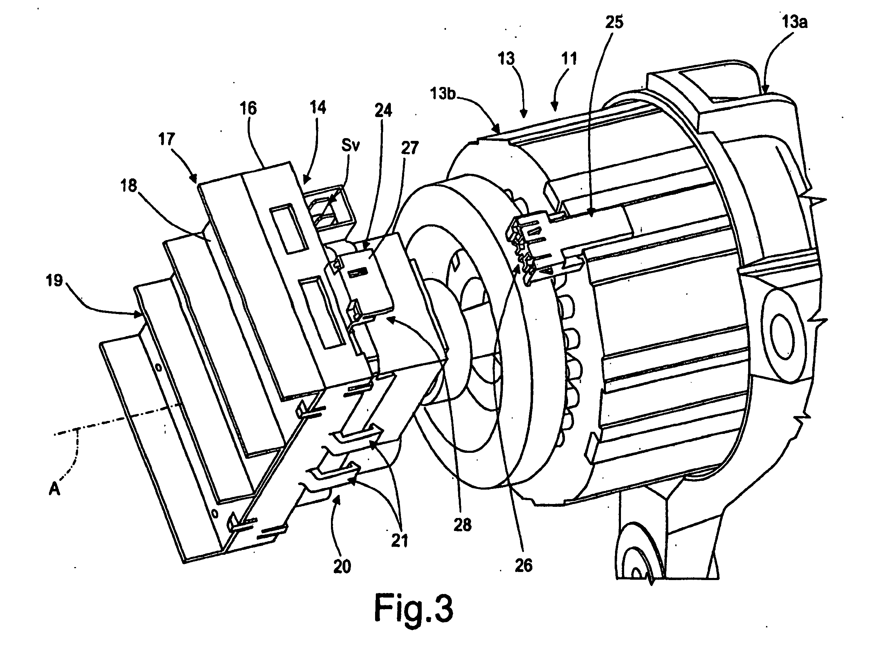

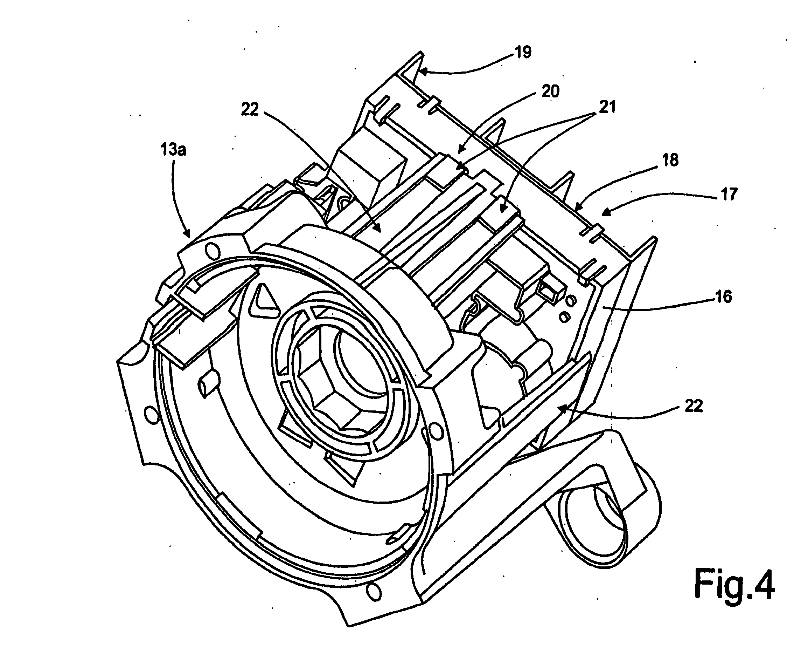

With reference to Figures 3 and 4, case 14 is designed to fit to one of the two covers 13a by means of a click-on fastening mechanism 20, which substantially comprises a number of substantially hook-like connecting tongues 21 projecting from the outer portion of case 14 in a direction substantially perpendicular to base plate 18, for locking case 14 to cover 13a of housing 13.

With reference to Figures 2 and 4, cover 13a comprises a number of connecting winglet 22 which projecting from the outer portion of the cover 13a in a direction substantially parallel with the longitudinal axis A of housing 13; whereas the connecting tongues 21 project from the box member 16 and are spaced so as to be aligned with and fit inside respective seats formed on the connecting winglet 22, when case 14 locks onto cover 13a.

In the example shown, electronic control module 12 locks onto cover 13a when the axial ends of tongues 21 are fully inserted inside the seats of the free ends of the connecting winglet 22 and click radially outwards to prevent withdrawal of tongues 21 from seats of the connecting winglet 22.

With reference to Figures 2 and 3, drive 7 also comprises a click-on electric connecting system, which comprises two electric connectors 24, 25 fixed rigidly to case 14 and electric motor 11 respectively, and aligned with each other, parallel to longitudinal axis A, so that mechanical connection of case 14 and electric motor 11 provides for simultaneously connecting electric connectors 24 and 25.

In the Figure 2 and 3 example, electric connector 25 has a casing preferably, though not necessarily, made of plastic, and which is fixed rigidly to electric motor 11 and designed to house an electric joint 26 connected by an inner conductor (not shown) to the stator of electric motor 11.

Electric connector 24, on the other hand, comprises an elongated supporting portion 27 also preferably, though not necessarily, made of plastic, and which projects from the lateral edge of the box member 16 in a direction substantially perpendicular to base plate 18, so as to fit with its free end facing electric connector 25; and an electric joint 28 connected electrically to electronic circuit 15 and located on the end of elongated supporting portion 27, so as to engage joint 26 of electric connector 25 as case 14 is connected mechanically to housing 13.

Electronic circuit 15 is defined by an inverter, and comprises an interface circuit 15a for receiving, filtering, and conditioning speed signals S_{V} from main control unit 10; a control circuit 15b connected to interface circuit 15a to receive speed signals S_{V} and generate control signals accordingly; and a power circuit 15c, which receives the control signals and accordingly regulates current/voltage supply to electric motor 11 to regulate the speed of the motor.

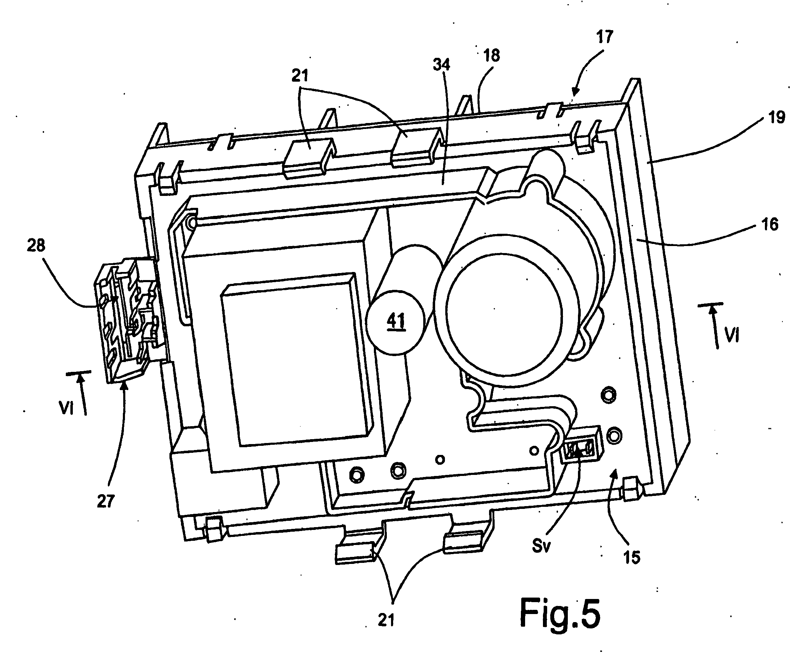

More specifically, in the Figure 5 example, interface circuit 15a, control circuit 15b, and power circuit 15c are conveniently defined respectively by three electronic boards 30a, 30b, 30c, which are superimposed facing one another inside case 14 to form a substantially sandwich structure.

With reference to Figure 5, electronic boards 30a, 30b, 30c are sized to fit inside case 14, and each have a track or electric path, which connects the various electric components forming part of the electronic circuit on the electronic board, and which has a number of contact areas or surface contact portions 31 made of conducting material and defining the input/output terminals of the electronic circuits of each electronic board 30a, 30b, 30c.

Electronic circuit 15 also comprises a number of elastically operated connecting devices 32, which are interposed between electronic boards 30a, 30b, 30c, and are aligned with, to electrically connect, surface contact portions 31.

More specifically, in the Figure 6 example, each connecting device 32 substantially comprises a tubular portion 32a made of plastic and extending substantially perpendicularly to electronic board 30a, 30b, 30c, so that its free ends face two respective surface portions 31 of two separate electronic boards 30a, 30b, 30c; and a contact 32b housed inside tubular portion 32a, with its free ends contacting surface portions 31.

More specifically, in the Figure 5 example, contact 32b comprises an elastic spring made of conducting material, fitted to slide freely inside tubular portion 32a, and the free ends of which rest against, to electrically connect, the surface contact portions 31 of the two electronic boards 30a, 30b, 30c.

In the Figure 5 example, tubular portion 32a of a connecting device 32 connecting the two outer electronic boards 30a, 30c in the sandwich structure extends through a through hole 33, formed in electronic board 30b interposed between electronic boards 30a and 30c, so as to connect electronic boards 30a and 30c electrically.

In the sandwich structure in the Figure 5 example, electronic board 30c of power circuit 15c rests on base plate 18; electronic board 30b of control circuit 15b is positioned facing and parallel to electronic board 30c, on the opposite side to base plate 18; and electronic board 30a of interface circuit 15a is positioned facing and parallel to electronic board 30b of control circuit 15b, on the opposite side to electronic board 30c.

With reference to Figures 5, control board 30a of interface circuit 15a is advantageously designed to prevent surface detachment of its larger electronic components when electronic circuit 15 is subjected to in-service vibration by appliance 1.

For this purpose, electronic board 30a of interface circuit 15a comprises a peripheral retaining wall 34, which projects from and extends along the electronic component connecting surface to surround the electronic components.

Electronic circuit 15 may also comprise a number of measuring sensors housed inside case 14 and fitted stably to electronic boards 30a, 30b, 30c to determine various wash cycle control parameters.

More specifically, electronic circuit 15 may comprise, for example, a sensor 40 for determining acceleration of drive 7 and defined, for example, by an accelerometer connected stably to one of electronic boards 30a, 30b, 30c; and/or a sensor 41 for determining the speed of electric motor 11 and fitted, for example, to one of electronic boards 30a, 30b, 30c, facing a portion of rotor shaft 8 of electric motor 11 to determine the speed of the shaft. In which case, rotor shaft 8 may be sized to project from cover 13a of housing 13 through a hole formed through cover 13a, and through a central hole, so as to project partly inside case 14 in a position facing speed sensor 41 (Figure 5).

The drive described above has numerous advantages.

Firstly, integrating the electronic control module directly with the electric motor housing greatly reduces the time taken to assemble the drive inside the appliance, and therefore the cost of assembling the appliance. In fact, the drive can be assembled inside the appliance in one operation comprising fixing the drive to the wash assembly, with no need to fix the electronic control module and/or wire the electric motor electrically to the electronic control module.

Secondly, the click-on mechanical connecting system and click-on electrical connecting system provide for fast, easy integration of the electronic control module with the electric motor housing.

Thirdly, the sandwich structure arrangement of electronic boards 30a, 30b, 30c is extremely compact, and provides for obtaining a narrow case substantially equal in width to the electric motor housing.

Fourthly, being internally elastic, the contact devices on the electronic boards guarantee electric connection of the surface portions, i.e. inputs/outputs, of the electronic boards even when the drive is subjected to relatively severe vibration.

Lastly, housing the sensors directly inside the electronic control module case further reduces assembly time, and protects the sensors against accidental shock. In fact, unlike known washing machines, in which the accelerometer or speed sensor is located on the electric motor, with no external protection, integrating the sensors in the electronic control module case greatly reduces the risk of damage to the sensors caused by accidental shock.

Clearly, changes may be made to the electric household appliance as described and illustrated herein without, however, departing from the scope of the present invention as defined in the accompanying Claims.

## Claims

1. An electric household appliance (1) comprising a casing (2); a laundry drum (5) mounted inside the casing (2) to rotate freely about a predetermined axis of rotation (A); a drive (7) for rotating the drum (5) about said axis of rotation (A) and comprising an electric motor (11) with a housing (13); and an electronic control module (12), which is connected electrically to said electric motor (11) to regulate the speed of the electric motor (11) and is integrated with the electric motor (11), wherein said electronic control module (12) comprises an electronic circuit (15) which regulates the speed of said electric motor (11) to regulate the rotation speed of the drum (5); and a case (14) housing said electronic circuit (15); said case (14) being fitted stably, but in easily removable manner, to said housing (13), **characterized by** comprising a first (24) and second (25) electric connecting means fixed rigidly to said case (14) and to said housing (13) respectively, and aligned with one another, said first (24) and second (25) electric connecting means being connected to said electronic circuit (15) and said electric motor (11) respectively, wherein said first (24) and second (25) connecting means comprise click-on electric connecting means, and wherein said first electric connecting means (24) comprise a first electric connector (24) designed to project from a lateral wall of said case (14) and to extend in a first direction parallel to a longitudinal axis of said housing (13); and said second electric connecting means (25) comprise a second electric connector (25) fixed stably to said housing (13) and extending in a second direction substantially parallel to said first direction, so as to engage said first connector (24) when the case (14) is connected mechanically to (13) a lateral cover (13a) of said housing.

2. An electric household appliance as claimed in Claim 1, wherein said housing (13) of the electric motor (11) comprises at least one lateral cover (13a); said case (14) being fixed stably, but in easily removable manner, to said lateral cover (13a) of said housing (13) of said electric motor (11).

3. An electric household appliance as claimed in Claim 1, wherein said case (14) and said lateral cover (13a) are connected to each other by a click-on connecting mechanism (20).

4. An electric household appliance as claimed in Claim 3, wherein said click-on connecting mechanism (20) comprises a number of hook-like tongues (21) projecting from a wall of said case (14), and extending in a direction substantially parallel to a longitudinal axis of said housing (13) to fit inside respective seats formed in said lateral cover (13a).

5. An electric household appliance as claimed in any one of the foregoing Claims, wherein said case (14) comprises a base plate (18) for supporting said electronic circuit (15).

6. An electric household appliance as claimed in Claim 5, wherein said electronic circuit (15) comprises an inverter.

7. An electric household appliance as claimed in Claim 5 or 6, wherein said electronic circuit (15) comprises an interface circuit (15a) for receiving, filtering, and conditioning speed signals (SV) from a main control unit (10); a control circuit (15b) connected to the interface circuit (15a) to receive the speed signals (SV) and generate control signals accordingly; and a power circuit (15c), which receives the control signals and accordingly regulates current/voltage supply to the electric motor (11) to regulate the speed of the electric motor (11).

8. An electric household appliance as claimed in Claim 7, wherein the interface circuit (15a), the control circuit (15b), and the power circuit (15c) comprise three respective electronic boards (30a) (30b) (30c), which are superimposed facing one another inside the case (14) to form a substantially sandwich structure.

9. An electric household appliance as claimed in Claim 8, wherein at least two of said electronic boards (30a) (30b) (30c) have a number of contact areas or surface contact portions (31) made of conducting material and defining the input/output terminals of the electronic circuits of each electronic board (30a) (30b) (30c); said electronic boards (30a) (30b) (30c) comprising elastically operated electric connecting devices (32), which are interposed between the electronic boards (30a) (30b) (30c) and aligned with, to electrically connect, the surface contact portions (31).

10. An electric household appliance as claimed in Claim 9, wherein said connecting devices (32) each comprise a tubular portion (32a) with its free ends facing two respective surface contact portions (31) of two separate electronic boards (30a) (30b) (30c); and an elastic spring made of conducting material and fitted inside the tubular portion (32a), with the free ends of the spring contacting the two surface contact portions (31).

11. An electric household appliance as claimed in any one of Claims 8 to 10, wherein at least one of the electronic boards (30a) (30b) (30c) comprises a peripheral retaining wall (34) projecting from the electronic component connecting surface to surround the electronic components.

12. An electric household appliance as claimed in any one of Claims 1 to 11, wherein said electronic control module (12) comprises measuring sensors (40) (41) for determining acceleration of said drive (7) and/or the speed of said electric motor (11).

## Patentansprüche

1. Elektrisches Haushaltsgerät (1), umfassend ein Gehäuse (2); eine Wäschetrommel (5), die innerhalb des Gehäuses (2) montiert ist, um sich frei um eine vorbestimmte Rotationsachse (A) zu rotieren, einen Antrieb (7) zum Drehen der Trommel (5) um die Drehachse (A) und umfassend einen Elektromotor (11) mit einem Gehäuse (13); und ein elektronisches Steuermodul (12), das elektrisch mit dem Elektromotor (11) verbunden ist, um die Drehzahl des Elektromotors (11) zu regeln, und das in den Elektromotor (11) integriert ist, wobei das elektronische Steuermodul (12) einen elektronischen Schaltkreis (15) umfasst, der die Drehzahl des Elektromotors (11) regelt, um auf diese Weise die Rotationsgeschwindigkeit der Trommel (5) zu regeln; und einen Kasten (14), in dem der elektronische Schaltkreis (15) untergebracht ist; wobei der Kasten (14) stabil, aber auf leicht entfernbare Weise am Gehäuse (13) befestigt ist, **dadurch gekennzeichnet, dass** es ein erstes (24) und zweites (25) elektrisches Anschlussmittel umfasst, die fest am Kasten (14) bzw. am Gehäuse (13) befestigt sind und aneinander ausgerichtet sind, wobei das erste (24) und das zweite (25) elektrische Anschlussmittel mit dem elektronischen Schaltkreis (15) bzw. dem Elektromotor (11) verbunden ist, wobei das erste (24) und das zweite (25) Anschlussmittel ein elektrisches Schnappverbindungsmittel umfasst,
wobei das erste elektrische Anschlussmittel (24) einen ersten elektrischen Stecker (24) umfasst, der so ausgeführt ist, dass er von einer Seitenwand des Kastens (14) vorspringt und sich in eine erste Richtung parallel zu einer Längsachse des Gehäuses (13) erstreckt, und das zweite elektrische Anschlussmittel (25) einen zweiten elektrischen Stecker (25) umfasst, der stabil am Gehäuse (13) befestigt ist und sich in eine zweite Richtung erstreckt, die im Wesentlichen parallel zur ersten Richtung ist, so dass er mit dem ersten Stecker (34) in Eingriff gelangt, wenn der Kasten (14) mechanisch mit einer seitlichen Abdeckung (13a) des Gehäuses (13) verbunden ist.

2. Elektrisches Haushaltsgerät nach Anspruch 1, wobei das Gehäuse (13) des Elektromotors zumindest eine seitliche Abdeckung (13a) umfasst; wobei der Kasten (14) stabil, aber auf leicht abnehmbare Weise an der seitlichen Abdeckung (13a) des Gehäuses (13) des Elektromotors (11) befestigt ist.

3. Elektrisches Haushaltsgerät nach Anspruch 1, wobei der Kasten (14) und die seitliche Abdeckung (13a) über einen Schnappverbindungsmechanismus (20) miteinander verbunden sind.

4. Elektrisches Haushaltsgerät nach Anspruch 3, wobei der Schnappverbindungsmechanismus (20) eine Anzahl hakenartiger Zungen (21) umfasst, die von einer Wand des Kastens (14) vorspringen und sich in eine Richtung erstrecken, die im Wesentlichen parallel zu einer Längsachse des Gehäuses (13) ist, um in entsprechende Sitze zu passen, die in der seitlichen Abdeckung (13a) ausgebildet sind.

5. Elektrisches Haushaltsgerät nach einem der vorstehenden Ansprüche, wobei der Kasten (14) eine Basisplatte (18) zum Tragen des elektronischen Schaltkreises (15) umfasst.

6. Elektrisches Haushaltsgerät nach Anspruch 5, wobei der elektronische Schaltkreis (15) einen Wechselrichter umfasst.

7. Elektrisches Haushaltsgerät nach Anspruch 5 oder 6, wobei der elektronische Schaltkreis (15) eine Schnittstellenschaltung (15a) zum Empfangen, Filtern und Konditionieren von Geschwindigkeitssignalen (SV) von einer Hauptsteuereinheit (10); eine mit der Schnittstellenschaltung (15a) verbundene Steuerschaltung (15b) zum Empfangen der Geschwindigkeitssignale (SV) und zum entsprechenden Erzeugen von Steuersignalen; und eine Stromschaltung (15c) umfasst, die die Steuersignale empfängt und die Strom-/Spannungsversorgung des Elektromotors (11) dementsprechend regelt, um die Geschwindigkeit des Elektromotors (11) zu regeln.

8. Elektrisches Haushaltsgerät nach Anspruch 7, wobei die Schnittstellenschaltung (15a), die Steuerschaltung (15b) und die Stromschaltung (15c) drei jeweilige zugehörige Leiterplatten (30a), (30b), (30c) umfassen, die einander innerhalb des Kastens (14) einander zugewandt überlagern, so dass sie im Wesentlichen eine SandwichStruktur bilden.

9. Elektrisches Haushaltsgerät nach Anspruch 8, wobei zumindest zwei der Leiterplatten (30a), (30b), (30c) eine Anzahl von Kontaktflächen oder Oberflächenkontaktabschnitten (31) aufweisen, die aus einem leitenden Material gefertigt sind und Eingangs-/Ausgangs-Anschlüsse der elektronischen Schaltkreis der einzelnen Leiterplatten (30a), (30b), (30c) begrenzen; wobei die Leiterplatten (30a), (30b), (30c) elastisch betätigte elektrische Verbindungseinrichtungen (32) umfassen, die zwischen den Leiterplatten (30a), (30b), (30c) eingefügt und an den Oberflächenkontaktabschnitten (31) so ausgerichtet sind, dass sie einen elektrischen Anschluss mit diesen herstellen.

10. Elektrisches Haushaltsgerät nach Anspruch 9, wobei die Verbindungseinrichtungen (32) jeweils einen Rohrabschnitt (32a), dessen freien Enden zwei jeweiligen Oberflächenkontaktabschnitten (31) von zwei separaten Leiterplatten (30a), (30b), (30c) zugewandt sind; und eine elastische Feder umfassen, die aus leitendem Material gefertigt und in den Rohrabschnitt (32a) gepasst ist; wobei die freien Enden der Feder die beiden Oberflächenkontaktabschnitte (31) berühren.

11. Elektrisches Haushaltsgerät nach einem der Ansprüche 8 bis 10, wobei zumindest eine der Leiterplatten (30a), (30b), (30c) eine Umfangsstützwand (34) umfasst, die von der die elektronischen Komponenten verbindenden Oberfläche vorspringt, um die elektronischen Komponenten zu umgeben.

12. Elektrisches Haushaltsgerät nach einem der Ansprüche 1 bis 11, wobei das elektronische Steuermodul (12) Messsensoren (40), (41) umfasst, um die Beschleunigung des Antriebs (7) und/oder die Geschwindigkeit des Elektromotors (11) zu ermitteln.

## Revendications

1. Appareil électroménager (1) comprenant un corps (2), un tambour à lessive (5) monté à l'intérieur du corps (12) pour tourner librement autour d'un axe de rotation (A) prédéterminé ; un entraînement (7) pour faire tourner le tambour (5) autour dudit axe de rotation (A) et comprenant un moteur électrique (11) ayant un carter (13) ; et un module de commande électronique (12), qui est connecté électriquement audit moteur électrique (11) pour réguler la vitesse du moteur électrique (11) et est intégré au moteur électrique (11), ledit module de commande électronique (12) comprenant un circuit électronique (15) qui régule la vitesse dudit moteur électrique (11) pour réguler la vitesse de rotation du tambour (5) ; et un boîtier (14) abritant ledit circuit électronique (15) ; ledit boîtier (14) étant adapté de manière stable, mais d'une manière aisément amovible, audit carter (13), **caractérisé par le fait qu'**il comprend des premiers (24) et seconds (25) moyens de connexion électrique fixés de manière rigide audit boîtier (14) et audit carter (13), respectivement, et alignés les uns par rapport aux autres, lesdits premiers (24) et seconds (25) moyens de connexion électrique étant connectés audit circuit électronique (15) et audit moteur électrique (11), respectivement, lesdits premiers (24) et seconds (25) moyens de connexion comprenant des moyens de connexion électrique à enclenchement, et lesdits premiers moyens de connexion électrique (24) comprenant un premier connecteur électrique (24) agencé pour se projeter à partir d'une paroi latérale dudit boîtier (14) et pour s'étendre dans une première direction parallèle à un axe longitudinal dudit carter (13) ; et lesdits seconds moyens de connexion électrique (25) comprenant un second connecteur électrique (25) fixé de manière stable audit carter (13) et s'étendant dans une seconde direction sensiblement parallèle à ladite première direction, de façon à s'engager avec ledit premier connecteur (24) lorsque le boîtier (14) est connecté mécaniquement à un couvercle latéral (13a) dudit carter (13).

2. Appareil électroménager selon la revendication 1, dans lequel ledit carter (13) du moteur électrique (11) comprend au moins un couvercle latéral (13a) ; ledit boîtier (14) étant fixé de manière stable, mais d'une manière aisément amovible, audit couvercle latéral (13a) dudit carter (13) dudit moteur électrique (11).

3. Appareil électroménager selon la revendication 1, dans lequel ledit boîtier (14) et ledit couvercle latéral (13a) sont connectés l'un à l'autre par un mécanisme de connexion à enclenchement (20).

4. Appareil électroménager selon la revendication 3, dans lequel ledit mécanisme de connexion à enclenchement (20) comprend un nombre de languettes en forme de crochet (21) se projetant à partir d'une paroi dudit boîtier (14) et s'étendant dans une direction sensiblement parallèle à un axe longitudinal dudit carter (13) pour s'adapter à l'intérieur de sièges respectifs formés dans ledit couvercle latéral (13a).

5. Appareil électroménager selon l'une quelconque des revendications précédentes, dans lequel ledit boîtier (14) comprend une plaque de base (18) pour supporter ledit circuit électronique (15).

6. Appareil électroménager selon la revendication 5, dans lequel ledit circuit électronique (15) comprend un inverseur.

7. Appareil électroménager selon l'une des revendications 5 ou 6, dans lequel ledit circuit électronique (15) comprend un circuit d'interface (15a) pour recevoir, filtrer et conditionner des signaux de vitesse (SV) provenant d'une unité de commande principale (10) ; un circuit de commande (15b) connecté au circuit d'interface (15a) pour recevoir les signaux de vitesse (SV) et générer des signaux de commande en conséquence ; et un circuit de puissance (15c), qui reçoit les signaux de commande et régule en conséquence une alimentation en courant/tension au moteur électrique (11) pour réguler la vitesse du moteur électrique (11).

8. Appareil électroménager selon la revendication 7, dans lequel le circuit d'interface (15a), le circuit de commande (15b) et le circuit de puissance (15c) comprennent trois cartes électroniques respectives (30a)(30b)(30c), qui sont superposées en étant tournées les unes vers les autres à l'intérieur du boîtier (14) pour former une structure sensiblement en sandwich.

9. Appareil électroménager selon la revendication 8, dans lequel au moins deux desdites cartes électroniques (30a)(30b)(30c) ont un nombre de zones de contact ou de parties de contact en surface (31) faites de matériau conducteur et définissant les bornes d'entrée/sortie des circuits électroniques de chaque carte électronique (30a)(30b)(30c) ; lesdites cartes électroniques (30a)(30b)(30c) comprenant des dispositifs de connexion électrique à actionnement élastique (32), qui sont interposés entre les cartes électroniques (30a)(30b)(30c) et alignés avec, pour établir une connexion électrique, les parties de contact en surface (31).

10. Appareil électroménager selon la revendication 9, dans lequel lesdits dispositifs de connexion (32) comprennent chacun une partie tubulaire (32a) ayant ses extrémités libres tournées vers deux parties de contact en surface respectives (31) de deux cartes électroniques (30a)(30b)(30c) séparées ; et un ressort élastique fait de matériau conducteur et adapté à l'intérieur de la partie tubulaire (32a), avec les extrémités libres du ressort en contact avec les deux parties de contact en surface (31).

11. Appareil électroménager selon l'une quelconque des revendications 8 à 10, dans lequel au moins l'une des cartes électroniques (30a)(30b)(30c) comprend une paroi de retenue périphérique (34) se projetant à partir de la surface de connexion de composants électroniques pour entourer les composants électroniques.

12. Appareil électroménager selon l'une quelconque des revendications 1 à 11, dans lequel ledit module de commande électronique (12) comprend des capteurs de mesure (40) (41) pour déterminer une accélération dudit entraînement (7) et/ou la vitesse dudit moteur électrique (11).
